# FASCICULE DE BREVET EUROPEEN

(11) **EP 1 626 193 B1**
(45) Date de publication et mention de la délivrance du brevet: **01.08.2007**
(21) Numéro de dépôt: 05015282.6
(22) Date de dépôt: 14.07.2005
(51) Int. Cl.: F16D 65/092, F16D 69/04

(54) **Organe de friction pour frein à disque, moyens de pression aptes à coopérer avec l'organe de friction et frein à disque muni d'un tel organe de friction**
Reibungselement für eine Scheibenbremse, an das Reibungselement anbringbares Druckelement, und Scheibenbremse mit einem solchen Reibungselement
Friction element for a disc brake, pressure means suitable to cooperate with said friction element, and disc brake comprising said friction element

(30) Priorité: 09.08.2004 FR 0408785
(43) Date de publication de la demande: 15.02.2006
(73) Titulaire: ROBERT BOSCH GMBH, 70442 Stuttgart (DE)
(72) Inventeur: Boisseau, Jean-Pierre, 75014 Paris (FR)
(74) Mandataire: Hurwic, Aleksander Wiktor

(56) Documents cités:
- GB-A- 2 143 916
- US-A- 3 235 037

## Description

La présente invention se rapporte à un organe de friction pour frein à disque, à des moyens de pression aptes à coopérer avec l'organe de friction et à un frein à disque muni d'un tel organe de friction.

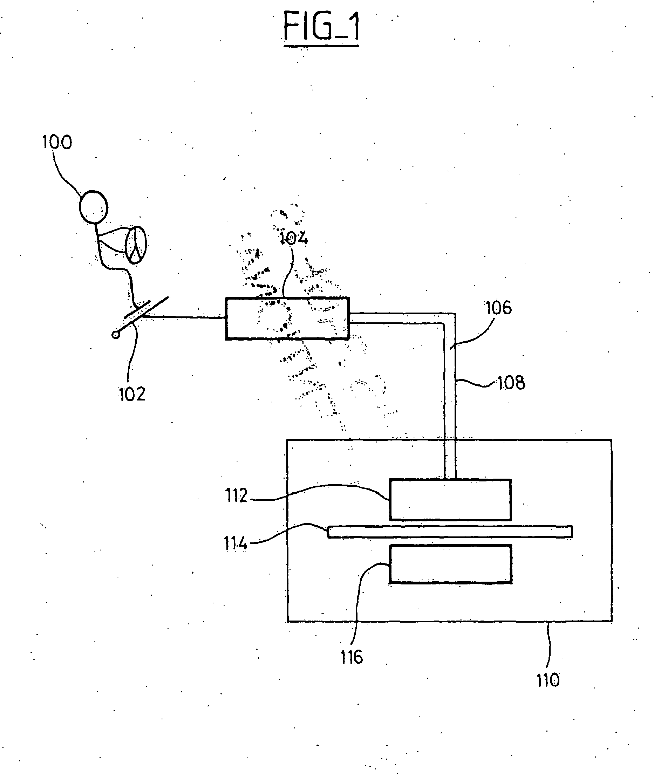

Le système de freinage d'un véhicule comprend généralement une pédale de frein 102 (figure 1) sur laquelle le conducteur 100 du véhicule appuie pour freiner ce dernier.

La force d'appui sur la pédale est transmise à un servomoteur 104 qui amplifie cette force et transmet une force amplifiée à un liquide 106 de frein situé dans son circuit 108.

Ce liquide 106 de frein, incompressible, transmet la force amplifiée à un système 110 de frein, par exemple à disques. Dans ce cas, des organes 112 et 116 de friction viennent frotter et serrer un disque 114 solidaire de la roue (non représentée) à freiner.

Une force de frottement freine donc le disque 114, et la roue associée, qui est serré entre les organes 112 et 116 de friction.

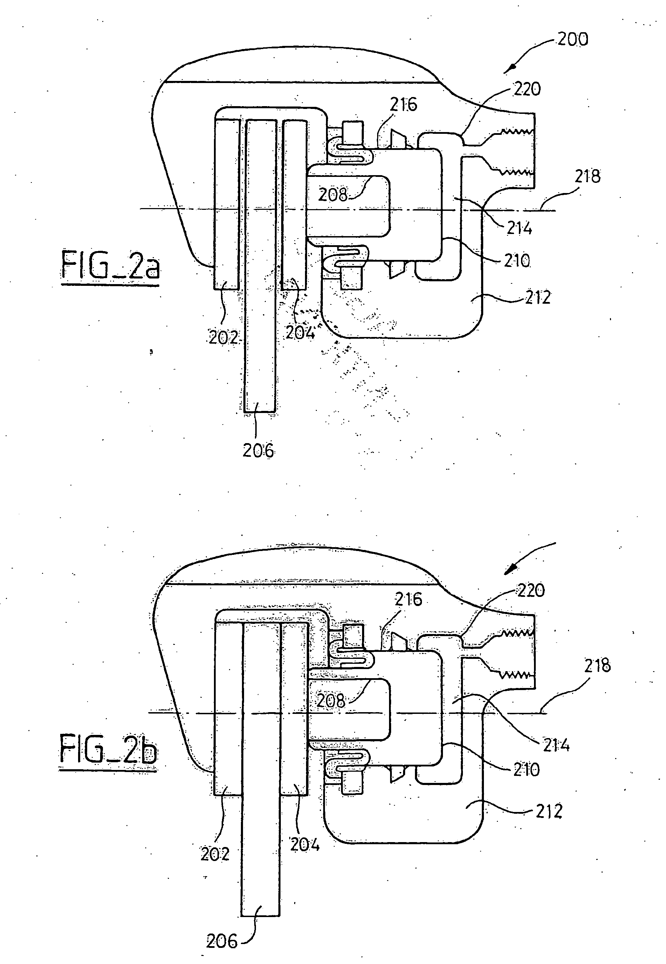

Plus en détail, un frein à disque 200 (figures 2a et 2b) comprend des organes de friction 202 et 204, tels que des plaquettes de frein, et un disque 206 solidaire d'une roue (non représentée) à freiner, ces plaquettes 202 et 204 étant destinées à s'appliquer contre les faces du disque 206 pour s'opposer au mouvement de ce dernier et ainsi freiner la roue solidaire du disque comme précédemment décrit à la figure 1.

Pour effectuer le serrage des plaquettes 202 et 204 contre le disque 206, on fait appel à des moyens 208 de pression, comprenant par exemple un piston 210, coulissant le long d'un axe 218 dans un logement 216 cylindrique d'un étrier 212. Ces moyens 208 de pression se déplacent sous l'effet de la pression d'un liquide 214 de frein présent dans un circuit 220 de liquide de frein.

La plaquette 204 étant en appui contre les moyens 208, le déplacement des moyens 208 vers le disque 206 amène la plaquette 204, puis la plaquette 202, au contact de ce disque 206 pour effectuer le freinage désiré, comme représenté sur la figure 2b.

Le contact entre la plaquette 204 et le disque 206 entraîne des vibrations qui peuvent être audibles, en particulier lorsque la pression de serrage de la plaquette 204 sur le disque 206 n'est pas très importante (par exemple de l'ordre de 5 à 15 bars). Ce bruit peut être très gênant et déplaisant pour le conducteur, les passagers du véhicule et les personnes se trouvant à proximité du véhicule lors de son freinage. Il est donc important de diminuer ce bruit en agissant le plus prêt possible de sa source.

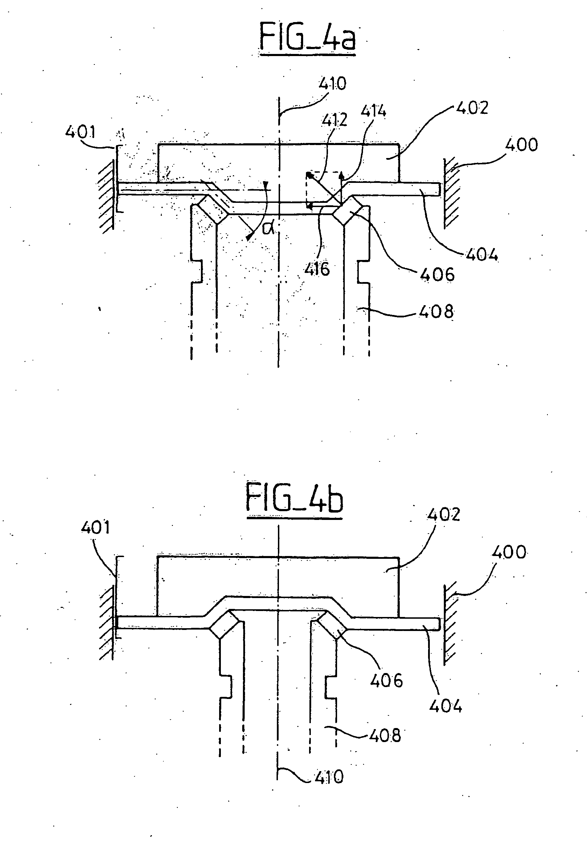

La figure 3 est une coupe schématique axiale d'une zone de coulissement d'un piston 308 analogue au logement 216 où coulisse le piston 210 (figures 2a et 2b).

Dans cette figure 3, on représente en particulier un couplage connu entre le piston 308 et l'organe 301 de friction, ce dernier comprenant un matériau de friction appelé garniture 302 et d'un support 304 sur lequel est maintenu la garniture 302, par exemple par collage.

GB 2 143 916 **décrit un frein à disque comportant un étrier comportant des zones inclinées par rapport au disque, lesdites zones étant adaptées pour appuyer sur les supports des patins de frein.**

Par ailleurs, il est connu de placer dans l'organe de friction 301 un élément 306 d'atténuation sonore, notamment entre le support 304 et le piston 308, cet élément 306 d'atténuation sonore étant en général constitué par une série d'épaisseurs de métal et de caoutchouc présentant une structure en sandwich.

Pour limiter les déplacements entre le piston 308 et l'organe 301 de friction, il est également connu de munir cet organe de friction 301 avec un composé 310 adhésif situé entre le piston 308 et l'élément 306 d'atténuation sonore.

Ce composé 310 adhésif amortit ainsi les vibrations qui proviennent des micro-déplacements latéraux entre le piston 308 et l'organe de friction 301, ces vibrations produisant un bruit haute fréquence.

La présente invention résulte de la constatation que le recours à un composé 310 adhésif pour limiter les déplacements entre le piston 308 et l'organe 301 de friction n'est pas satisfaisant car il entraîne des coûts supplémentaires de fabrication du dispositif de frein à disque.

L'invention résulte aussi de la constatation que le composé 310 adhésif ne permet pas à un fabricant de régler l'effort tangentiel entre l'élément 306 d'atténuation sonore et le piston 308 de façon à adapter cet effort tangentiel aux vibrations propres au véhicule auquel est destiné le système de freinage.

La présente invention vise à remédier à au moins un des inconvénients précédemment décrits. Elle concerne un organe de friction pour frein à disque de véhicule avec les caractéristiques téchniques de la revendication 1.

Grâce à un tel organe de friction, il est possible d'adapter la réduction de bruits en réglant, en fonction des vibrations propres à chaque véhicule muni du frein à disque, l'effort tangentiel entre le piston 308 et l'organe de friction 301 à une valeur adéquate pour amortir ces vibrations.

En outre, un organe de friction selon l'invention requiert un élément d'atténuation sonore de moindre surface, et donc de moindre coût, que dans un système selon l'art antérieur étant donné qu'une partie de l'atténuation sonore est mise en oeuvre par la structure du système de freinage.

Finalement, aucun adhésif n'est requis entre le piston et l'organe de friction, ce qui entraîne une réduction de coût importante.

Dans une réalisation, l'organe de friction présente un évidemment.

Selon une réalisation, la rupture d'angle sur la surface de l'organe de friction forme un cône d'appui pour les moyens de pression.

Dans une réalisation, le cône d'appui est au moins en partie réalisé avec la garniture.

L'invention concerne aussi des moyens de pression aptes à coopérer avec un organe de friction associé à l'extrémité libre des moyens de pression.

Conformément à cette invention, les moyens de pression ont la forme complémentaire dudit organe de friction pour épouser la surface de l'organe de friction destinée à être en vis-à-vis des moyens de pression selon l'une des réalisations précédentes.

Dans une réalisation, les moyens de pression comprennent un piston.

L'invention concerne enfin aussi un frein à disque muni d'un organe de friction comprenant une garniture destinée à agir avec un piston amenant cette garniture au contact du disque.

Conformément à cette invention, l'organe de friction est conforme à l'une des réalisations précédentes de l'organe de friction.

D'autres caractéristiques et avantages de l'invention apparaîtront avec la description d'un mode de réalisation de l'invention effectuée ci-dessous, à titre illustratif et non limitatif, en référence aux figures ci-jointes:
- La figure 1, déjà décrite, est un schéma du fonctionnement d'un dispositif de freinage connu,
- Les figures 2a et 2b, déjà décrites, sont des schémas du fonctionnement d'un frein à disque, respectivement au repos et pendant un freinage,
- La figure 3, déjà décrite, représente une coupe axiale d'une réalisation connue de couplage entre un organe de friction et un piston,
- Les figure 4a et 4b sont deux schémas d'une coupe axiale représentant un premier mode de réalisation du couplage un organe de friction et des pistons conformément à l'invention, et
- La figure 5 est un schéma d'une coupe axiale d'un mode de réalisation ne formant pas partie de l'invention sans éléments d'atténuation sonore.

Un premier mode de réalisation de l'invention est décrit ci-dessous à l'aide de la figure 4a qui est une coupe axiale du système de frein à disque comprenant :
- un organe 401 de friction, cet organe 401 étant muni notamment d'une garniture de friction 402 et d'un support 404,
- des moyens 408 de pression tel qu'un piston et
- le logement 400 cylindrique où coulissent l'organe 401 de friction et les moyens 408 de pression.

Conformément à l'invention, la garniture 402 et le support 404 présentent une surface présentant une rupture d'angle α telle que l'action entre la garniture 402 et le piston 408 présente une composante perpendiculaire à l'axe 410 de déplacement du piston et une composante parallèle à cet axe 410.

Dans cette réalisation, cette rupture d'angle forme un cône d'appui présentant un bord de symétrie circulaire sur lequel est placé un élément 406 d'atténuation sonore annulaire.

Ainsi, la force 412 F de pression se décompose en une force 414 Fn normale et une force 416 Ft tangentielle, dépendantes de la rupture d'angle α.

Dès lors, en contrôlant la valeur de α, il est possible de déterminer la valeur de la force tangentielle optimale pour limiter les vibrations latérales de l'organe 401 de friction par rapport au piston 408 et, par conséquent, pour limiter le bruit engendré par le système de freinage.

La présente invention est susceptible de nombreuses variantes, comme celle représentée dans la figure 4b où la rupture d'angle α du support 404 est telle qu'elle définit un évidemment dans l'organe 401 de friction, tandis que la réalisation de la figure 4a génère un évidemment dans le piston 408.

En d'autres termes, la rupture d'angle α de la surface de l'organe de friction en vis-à-vis du piston peut être convexe ou concave.

De la même façon, cette rupture d'angle peut être ajourée ou non-ajourée.

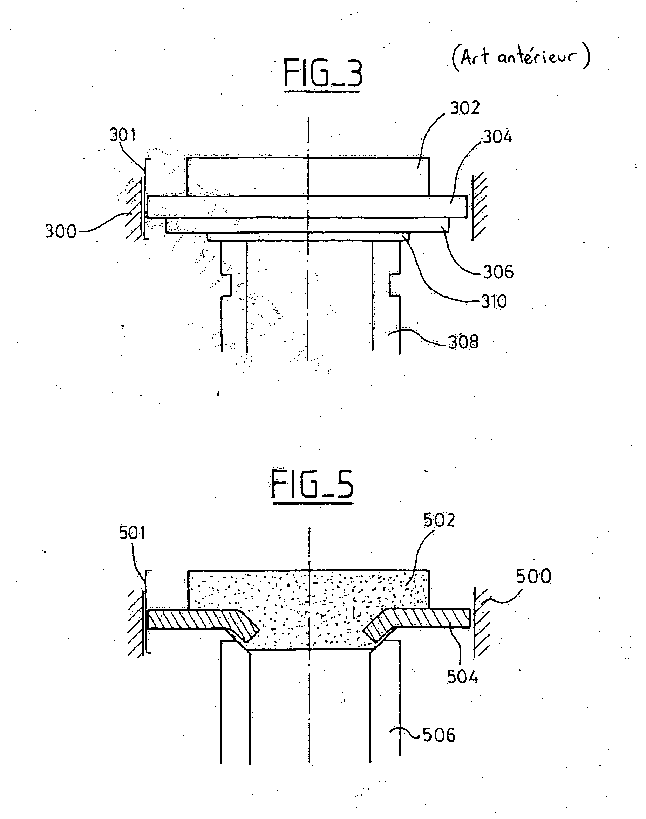

Ainsi, dans une réalisation ne formant pas partie de l'invention schématisée sur la figure 5, la protubérance réalisée dans un support 504 est ajourée et la garniture 502 considérée présente la forme requise pour venir au contact des moyens 506 de pression, par exemple un piston.

Ainsi, les moyens 506 de pression sont couplés directement à l'organe 501 de friction (comprenant notamment la garniture 502 et le support 504) sans requérir un élément d'atténuation sonore intermédiaire, ce qui réduit particulièrement les coûts de fabrication et la complexité du dispositif généré.

## Revendications

1. Organe (401, 501) de friction pour frein à disque de véhicule, cet organe de friction comprenant une garniture (402, 502) destinée à agir avec des moyens (408, 506) de pression amenant cette garniture au contact d'un disque associé à une roue du véhicule à freiner, l'organe (401, 501) de friction est muni d'une surface, destinée à être en vis-à-vis des moyens (408, 506) de pression, présentant une rupture d'angle α non nul telle que l'action (412) des moyens (408, 506) de pression sur l'organe (401,501) de friction comprend une composante (414) parallèle et une composante (416) perpendiculaire par rapport à l'axe (410) de déplacement des moyens (408,506) de pression destinés à agir sur l'organe (401, 501) de friction présentant une protubérance sur sa surface destinée à être en vis-à-vis des moyens (408,506) de pression, la rupture d'angle α étant comprise **dans l'intervalle** ]0, 45] degrés, l'organe (401, 501) de friction comprenant un élément (406) d'atténuation sonore compris entre l'organe (401) de friction et les moyens (408) de pression **caractérisé en ce que** l'élément (406) d'atténuation sonore présente une forme annulaire, par exemple de section rectangulaire, épousant la rupture d'angle de la surface de l'organe (401) de friction.

2. Organe (401) de friction selon la revendication précédente, **caractérisé en ce qu'**il présente un évidemment.

3. Organe (401, 501) de friction selon l'une des revendications précédentes, **caractérisé en ce que** la rupture d'angle sur la surface de l'organe de friction forme un cône d'appui pour les moyens (408, 506) de pression.

4. Organe (501) de friction selon la revendication 3, **caractérisé en ce que** le cône d'appui est au moins en partie réalisé avec la garniture (502).

5. Moyens (408, 506) de pression aptes à coopérer avec un organe (401, 501) de friction selon l'une des revendications précédentes, ledit organe (401, 501) de friction étant associé à l'extrémité libre des moyens (408, 506) de pression, **caractérisés en ce que** les moyens (408, 506) de pression ont la forme complémentaire dudit organe (401, 506) de friction pour épouser la surface de cet organe (401, 501) de friction destinée à être en vis-à-vis des moyens (408, 506) de pression.

6. Moyens (408, 506) de pression selon la revendication 5, **caractérisés en ce qu'**ils comprennent un piston.

7. Frein à disque muni d'un organe (401, 501) de friction comprenant une garniture (402, 502) destinée à agir avec un piston (408, 506) amenant cette garniture au contact du disque, **caractérisé en ce que** l'organe (401, 501) de friction est conforme à l'une des revendications 1 à 5.

## Claims

1. Friction element (401, 501) for a vehicle disc brake, this friction element comprising a lining (402, 502) intended to act with pressure means (408, 506) that bring this lining into contact with a disc associated with a wheel of the vehicle which is to be braked, the friction element (401, 501) being provided with a surface, intended to face the pressure means (408, 506) that has a break in continuity of non-zero angle α such that the action (412) of the pressure means (408, 506) on the friction element (401, 501) includes a parallel component (414) and a perpendicular component (416) considered with respect to the line (410) of movement of the pressure means (408, 506) intended to act on the friction element (401, 501) which has a protrusion on its surface intended to face the pressure means (408, 506), the angle α of the break in continuity lying in the range [0, 45] degrees, the friction element (401, 501) comprising a sound-deadening element (406) contained between the friction element (401) and the pressure means (408), **characterized in that** the sound-deadening element (406) has an annular shape, for example of rectangular cross section, following the break in continuity in the surface of the friction element (401).

2. Friction element (401) according to the preceding claim, **characterized in that** it has a recess.

3. Friction element (401, 501) according to one of the preceding claims, **characterized in that** the break in continuity on the surface of the friction element forms a cone against which the pressure means (408, 506) can rest.

4. Friction element (501) according to Claim 3, **characterized in that** the bearing cone is at least partially produced with the lining (502).

5. Pressure means (408, 506) able to collaborate with a friction element (401, 501) according to one of the preceding claims, the said friction element (401, 501) being associated with the free end of the pressure means (408, 506), **characterized in that** the pressure means (408, 506) have a shape that complements the said friction element (401, 506) so as to follow the surface of this friction element (401, 501) that is intended to face the pressure means (408, 506).

6. Pressure means (408, 506) according to Claim 5, **characterized in that** they comprise a piston.

7. Disc brake equipped with a friction element (401, 501) comprising a lining (402, 502) intended to act with a piston (408, 506) that brings this lining into contact with the disc, **characterized in that** the friction element (401, 501) is a friction element according to one of Claims 1 to 5.

## Patentansprüche

1. Reiborgan (401, 501) für eine Fahrzeugscheibenbremse, wobei dieses Reiborgan einen Belag (402, 502) aufweist, der mit Andrückmitteln (408, 506) zusammenwirken soll, welche diesen Belag so verlagern, dass er mit einer Scheibe in Kontakt gelangt, die einem zu bremsenden Fahrzeugrad zugeordnet ist, wobei das Reiborgan (401, 501) mit einer Fläche versehen ist, die den Andrückmitteln (408, 506) gegenüberliegen soll und eine Winkeländerung α, die ungleich null ist, aufweist, so dass die Wirkung (412) der Andrückmittel (408, 506) auf das Reiborgan (401, 501) eine bezüglich der Verlagerungsachse (410) der Andrückmittel (408, 506) parallele Komponente (414) und senkrechte Komponente (416) umfasst, wobei die Andrückmittel auf das Reiborgan (401, 501) einwirken sollen, welches einen Vorsprung an seiner Oberfläche aufweist, die den Andrückmitteln (408, 506) gegenüberliegen soll, wobei die Winkeländerung α in dem Intervall von ]0, 45] Grad liegt und das Reiborgan (401, 501) ein zwischen dem Reiborgan (401) und den Andrückmitteln (408) angeordnetes Schalldämpfungselement (406) aufweist, **dadurch gekennzeichnet, dass** das Schalldämpfungselement (406) eine Ringform beispielsweise mit einem rechteckigen Querschnitt besitzt, die an die Winkeländerung der Oberfläche des Reiborgans (401) angepasst ist.

2. Reiborgan (401) nach dem vorhergehenden Anspruch, **dadurch gekennzeichnet**, das es eine Vertiefung aufweist.

3. Reiborgan (401, 501) nach einem der vorhergehenden Ansprüche, **dadurch gekennzeichnet, dass** die Winkeländerung an der Oberfläche des Reiborgans einen Stützkegel für die Andrückmittel (408, 506) bildet.

4. Reiborgan (501) nach Anspruch 3, **dadurch gekennzeichnet, dass** der Stützkegel zumindest teilweise mit dem Belag (502) ausgebildet ist.

5. Andrückmittel (408, 506), die mit einem Reiborgan (401,501) nach einem der vorherdengehenden Ansprüche zusammenwirken können, wobei das Reiborgan (401, 501) dem freien Ende der Andrückmittel (408, 506) zugeordnet ist, **dadurch gekennzeichnet, dass** die Andrückmittel (408, 506) die zu dem Reiborgan (401, 501) komplementäre Form besitzen, um an die Oberfläche dieses Reiborgans (401, 501) angepasst zu sein, die den Andrückmitteln (408, 506) gegenüber liegen soll.

6. Andrückmittel (408, 506) nach Anspruch 5, **dadurch gekennzeichnet, dass** sie einen Kolben aufweisen.

7. Scheibenbremse, die mit einem Reiborgan (401, 501) versehen ist, das einen Belag (402, 502) aufweist, der mit einem Kolben (408, 506) zusammenwirken soll, der diesen Belag so verlagert, dass er mit der Scheibe in Kontakt gelangt, **dadurch gekennzeichnet, dass** das Reiborgan (401, 501) einem der Ansprüche 1 bis 5 entspricht.
